# EUROPEAN PATENT APPLICATION

(11) **EP 4 764 209 A1**
(43) Date of publication of application: **24.06.2026**
(21) Application number: 25225387.7
(22) Date of filing: 19.12.2025
(51) Int. Cl.: F03D 13/40

(54) **DEVICE FOR CONNECTING AND STABILIZING FRAMES FOR STORAGE AND TRANSPORT OF WIND TURBINE BLADES**

(30) Priority: 20.12.2024 BE 202405918
(71) Applicant: Container Technics nv, 2110 Wijnegem (BE)
(72) Inventor: LEDEGEN, Wim, 2110 Wijnegem (BE)
(74) Representative: Brantsandpatents bv

(57) **Abstract**

The present invention relates to an apparatus for securing storage and transport frames via their corner castings for the transport and storage of wind turbine blades, comprising a central shaft with two ends and a threaded sleeve. Wherein the central shaft comprises, at its center, two identical separated end portions, the separated end portions being provided on their external circumference with an external thread. Wherein the central shaft comprises, on opposite sides of the separated end portions, outer end portions that are further provided with a connection mechanism configured to engage with the corner castings of storage and transport frames. Wherein the threaded sleeve is suitable for connecting the separated end portions of the central shaft, wherein the threaded sleeve spans the two separated end portions of the central shaft and is provided with an internal thread that engages fittingly on the external thread.

## Description

### TECHNICAL FIELD

The invention relates to an apparatus suitable for securing storage and transport frames via their corner castings for the transport and storage of wind turbine blades, comprising a central shaft with two ends and a threaded sleeve.

The invention in a second aspect also relates to a method suitable for transporting and storing wind turbine blades.

### PRIOR ART

In the current industry for transporting and storing wind turbine blades, storage and transport frames are often used that must be connected for stability and safety during storage and transport. One of the main problems is that wind turbine blades, due to their large surface area, catch a lot of wind, as a result of which they may become unstable during transport. Moreover, the blades are relatively light, as a result of which they are susceptible to being blown away under the influence of strong wind. However, there are various challenges associated with effectively connecting these frames. One of the problems is that movements and varying loads during transport constitute a considerable challenge, because the load continually changes depending on factors such as wind, transport conditions, and the weight of the blades. This can lead to instability and structural damage when the connection is not adequately designed.

Traditional connection methods often fall short in that they are not well able to absorb the forces and movements during transport. This can result in insufficient stability, as a result of which excessive stress and ultimately damage to the blades or the transport frame can occur. An important challenge is that the storage and transport frames often vary in length and configuration, which makes it difficult to connect them efficiently. The lack of adaptability leads to problems in terms of stability and safety, especially when the frames cannot be properly matched to one another. The current process for adjusting the connection length is often cumbersome and time-consuming, which leads to delays and increased costs in the logistics chain. These inefficiencies can also result in increased risks of blade damage or delays in transport scheduling.

Further, there is a challenge in safely and effectively locking the connections since loosening during transport or storage can lead to serious damage to the wind turbine blades and frames. This not only increases the likelihood of accidents, but can also lead to loss of cargo and delays in the logistics chain. Finally, there are problems relating to the handling and storage of the connection systems, since these are often large and heavy, which makes it difficult to move and store them efficiently. This can lead to safety risks and increased logistics costs.

### SUMMARY OF THE INVENTION

In a first aspect, the present invention relates to an apparatus according to claim 1 suitable for securing storage and transport frames via their corner castings for the transport and storage of wind turbine blades. The apparatus provides a robust, efficient, and versatile solution for connecting transport frames via corner castings, which ensures increased stability during transport and minimizes the risk of damage to wind turbine blades. The design with a central shaft, an external thread, and a threaded sleeve enables simple and rapid installation, while the precisely fitting connection increases safety and reliability. Thanks to the use of connection mechanisms at the outer ends, the apparatus is compatible with different frame configurations, which increases versatility. Moreover, the apparatus is reusable and the compact and lightweight design contributes to more efficient transport and lower operational costs, while promoting durability. Preferred embodiments of the apparatus are shown in claims 2 to 11.

In a second aspect, the present invention relates to a method according to claim 12 suitable for transporting and storing wind turbine blades. Further preferred embodiments of the method are shown in claims 13 to 15.

### DESCRIPTION OF THE FIGURES

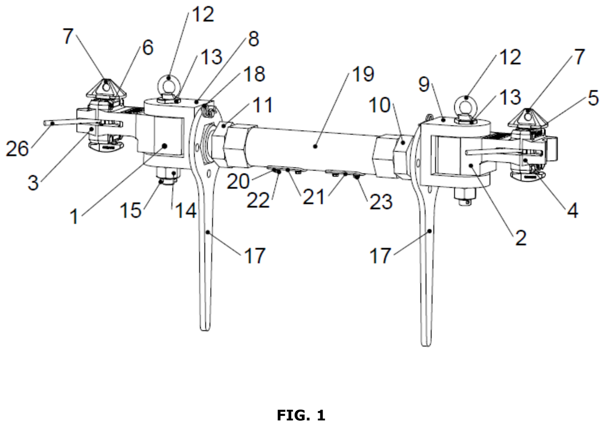

Figure 1 shows a schematic representation of an embodiment of the invention, wherein the specific configuration of the central shaft and the connection mechanisms is shown. The central axis is spanned by a threaded sleeve (19), whereby the left and right separated end portions (28, 29) are concealed. This is necessary to make a strong adaptive connection that can safely connect storage and transport frames, as a result of which the stability of the connection is improved. At the two outer ends of the central shaft there are the connection mechanisms (4, 5, 6, 7), which are suitable to engage with corner castings (24 & 25) of storage and transport frames. The threaded sleeve (19) comprises an internal thread that is capable of engaging with the external thread of the connection mechanisms, thereby providing a strong and stable connection that prevents unwanted movement or loosening during use. This threaded sleeve is further bounded by two lock nuts with, respectively, right-hand and left-hand thread (10, 11), which can be tightened or loosened with the adjusting and locking key (17). The adjusting and locking key can, when not in use, be secured to the structure with a double spring cotter pin (18). The threaded sleeve (19) is provided with two cover elements (21) that are fastened with bolts (22, 23). To unscrew the threaded sleeve, the cover elements must first be removed. By turning the threaded sleeve with the adjusting and locking key (17), the locking bolts (16) can be brought into line with the opening in the threaded sleeve, after which they can be released. By further turning, the locking mechanisms (8, 9) can be disengaged from one another and the threaded sleeve (19) can be removed and replaced by a version with a suitable length.

The lifting eye (12) serves to move the apparatus safely and efficiently before and after use. The lifting eye provides considerable safety advantages, such as reducing the risk of injury during the movement of heavy components. Moreover, the lifting eye ensures efficient movement, thereby saving time and effort during the installation and disassembly of the apparatus. The lifting eye is mounted on the hinge pin (13), which is secured by a nut (14) that is locked by a spring-type cotter pin (15). The connection mechanism comprises a twistlock housing (27). Both twistlock housings are used to connect the apparatus to the corners of the stacking frames by means of corner castings. This is achieved by inserting the locking cone (7) into the corner castings and securing the connection by rotating the cone via the lever (26) of the connection mechanism (3, 4).

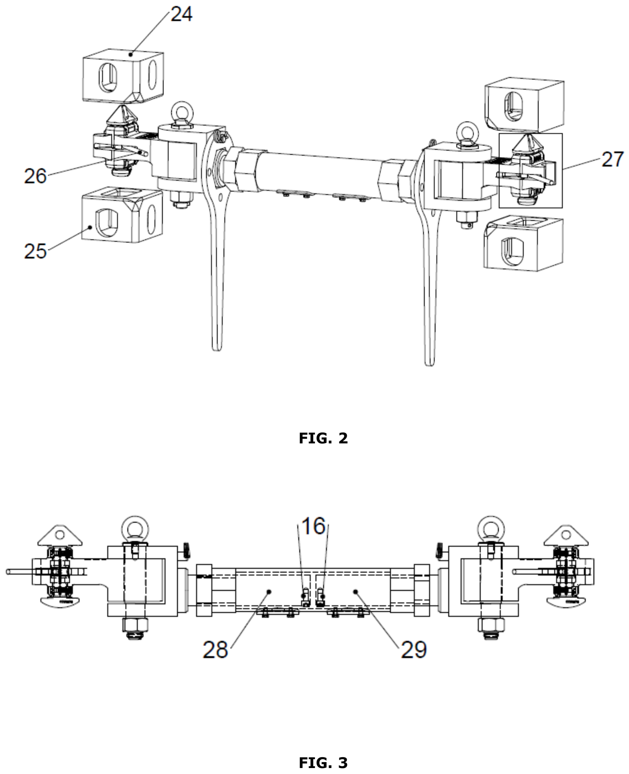

Figure 2 shows another embodiment of the apparatus wherein the twistlock system (27) engages with the corner casting at the bottom of the storage and transport frame (24) and the corner castings at the top of the storage and transport frame (25). The locking cone (7) of the twistlock system (27) engages with the corner castings (24) at the bottom of the storage and transport frame, while the lower circular flange of the twistlock system (27) locks the upper side of the frame (25). This mechanism provides a firm connection that prevents shifting during transport and contributes to the overall stability of the stacked frames. The lever of the locking cone (26) is used to secure the apparatus firmly in the corner castings (24, 25). When the lever (26) is actuated, it rotates the locking cone (7) and the lower circular flange. That ensures that all components of the twistlock system (27) secure the entire structure. This provides additional assurance in that the lever is mechanically locked, as a result of which undesired movements of the apparatus during transport are prevented. Moreover, the lever is simple to operate, which makes securing and disconnecting the apparatus quick and safe. These properties contribute significantly to the overall safety and stability of the connection, especially in the transport or storage of heavy or valuable loads.

Figure 3 shows the side view of an embodiment of the apparatus. The threaded sleeve (19) connects both connection mechanisms (3, 4). The central shaft is divided into a left separated end portion (28) and a right separated end portion (29). The central shaft comprises adjustable elements, such as the right-hand and left-hand lock nuts (10, 11), which serve to secure the threaded sleeve. At both ends locking systems are visible, including twistlock housings (27), which enable a firm connection with the storage and transport frames. The lifting eyes (12) are also visible, which indicates the capability to hoist and move the apparatus safely. Further, there are twistlock systems with asymmetric locking cones, which contribute to stability and safety during installation. It is important in this respect that the conical shape (7) is oriented upward, so that it can latch into the corner castings at the underside (24) of the overlying transport frame. If the conical shape is oriented downward, it will not form a stable connection with the stacked frames. The locking bolts (16) serve to secure the two identical separated end portions (28, 29), so that these do not come loose from the threaded sleeve (19). These bolts are shielded by the cover elements (21). This can avoid the threaded sleeve (19) being unintentionally unscrewed from the two identical separated end portions.

### DETAILED DESCRIPTION

The term "apparatus" in the present invention refers to an apparatus that is used for connecting storage and transport frames on which blades of wind turbines are placed.

By the term "central shaft" is meant in the present invention the main component of the apparatus, consisting of a threaded sleeve, two lock nuts at the ends of the threaded sleeve, and an integrated adjusting and locking key.

The term "threaded sleeve" refers to the threaded sleeve of the apparatus, by means of which the length of the apparatus can be adjusted by **screwing the threaded sleeve onto the twistlock,** while the lock nuts with both left-hand and right-hand threads are loosened or tightened. The threaded sleeve can contain an internal thread and can be screwed onto the separated end portions of the central shaft. It can also have an integrated nut at both ends and contain at least one cover element.

The term "lock nuts" refers to the nuts used to lock the threaded sleeve in position. One lock nut is provided with a left-hand thread and the other with a right-hand thread, thereby enabling precise length adjustment of the apparatus.

The term "integrated adjusting and locking key" refers to an integrated tool that is connected to the lock nuts or integrated nuts of the threaded sleeve to make and secure small adjustments in the length of the apparatus. This allows the correct **length to be** locked with the lock nuts. This tool can, when not in use, be fastened to the structure with a double cotter pin.

The term "connection mechanism" refers to the mechanisms at the outer ends of the central shaft, which comprise a locking mechanism. This mechanism comprises an external thread for screwing on the threaded sleeve and thereby forming a stable connection. Furthermore, this housing comprises a lifting device, a hinge mechanism and a locking cone.

The term "twistlock system" refers to a locking mechanism or connection mechanism that connects to the corner castings of the storage and transport frames to ensure a secure connection.

The term "lifting device" refers to a lifting device, such as a lifting eye, that is anchored in the hinge pin within the twistlock system for transport purposes.

By the term "corner casting" is meant the corner castings of the container frames or transport frames, which are in interaction with the twistlock system for securing the apparatus.

The term "maximum axial alignment ratio" refers to the ratio of the axial alignment relative to the length of the threaded sleeve. Likewise, the term "maximum transverse alignment ratio" refers to the ratio of the transverse alignment relative to the length of the threaded sleeve.

The term "DNV" refers to Det Norske Veritas and focuses primarily on offshore structures, shipbuilding, oil and gas industry, renewable energy and other marine applications. DNV contain guidelines and standards that play a role in this sector to ensure safety, reliability, and sustainability. In this connection, a DNV certification is recognized as a quality mark.

The term "Eurocode" refer to a set of European standards for the design of buildings and civil infrastructure. They cover a broad range of construction types and offer calculation rules and design guidelines.

The term "maximum safe load" refers to the maximum safe load of the apparatus, determined according to DNV and Eurocode regulations.

The apparatus operates by firmly connecting frames for storage and transport of wind turbine blades to one another, thereby improving stability during transport. The threaded sleeve provides adaptability in length, while the locking cones provide for a quick and secure fastening to the corner castings of the frames. The method for connecting frames for storage and transport of wind turbine blades comprises placing the wind turbine blades on the frames, verifying the applicable maximum safe loads of the apparatus, ensuring compliance with axial and transverse alignment ratios, and verifying the distance between the corner castings. If the correct length is not achieved, the threaded sleeve is replaced with one of the correct length and locked by tightening the lock nuts using the adjusting and locking key. The apparatus is then anchored to the storage and transport frames and the locking mechanisms are correctly locked in the corner castings. The integrated adjusting and locking key makes the adjustment of the apparatus simple, while the lifting eyes and locking cones provide for safe lifting and locking options. The use of cover elements and the simple disassembly system make maintenance and repairs easy, which benefits the usability and durability of the apparatus.

In a first aspect, the invention relates to an apparatus suitable for securing storage and transport frames via their corner castings for the transport and storage of wind turbine blades, comprising a central shaft with two ends and a threaded sleeve. In a further embodiment, the invention provides that the central shaft comprises, at its center, two identical separated end portions, the separated end portions being provided on their external circumference with an external thread. In a still further embodiment, the apparatus comprises that the central shaft comprises, on opposite sides of the separated end portions, outer end portions that are further provided with a connection mechanism configured to engage with the corner castings of storage and transport frames. In a still further embodiment, the invention comprises that the threaded sleeve is suitable for connecting the separated end portions of the central shaft, wherein the threaded sleeve spans the two separated end portions of the central shaft and is provided with an internal thread that fittingly engages with the external thread.

In a particular preferred embodiment, the apparatus concerns a system that makes use of threaded sleeves. The threaded sleeve connects two identical separated end portions, thereby providing a stable and secure coupling between the storage and transport frames. The flexibility of the threaded sleeve makes it possible to meet specific project requirements, as a result of which the apparatus can be deployed in diverse situations, which increases versatility and usability. This flexibility makes the system suitable for various applications, such as transporting wind turbine blades of different sizes, which reduces the need for different specialized components. This leads to lower costs and more efficient use of materials. These rapid adjustments make it possible to respond better to changing transport and storage needs and unforeseen circumstances, which leads to a shorter throughput time, less downtime and lower operational costs, as well as improved planning of logistics processes.

In a preferred embodiment, the apparatus is characterized in that the threaded sleeve has a length of at least 1,200 mm and a maximum of 3,600 mm. The threaded sleeve connects two identical separated end portions of a central shaft, which provides for a stable and secure coupling between the storage and transport frames. In a particular preferred embodiment, the apparatus concerns a system that makes use of threaded sleeves with adjustable lengths, so that the distance between storage and transport frames can be adjusted. This system makes use of a threaded sleeve that can be adjusted in length. This configuration makes it possible to adapt the threaded sleeve to different distances between the storage and transport frames, as a result of which the apparatus is flexible and versatile. The length of the threaded sleeve can, for example, vary from 1,200 mm to 3,600 mm, preferably between 1,500 mm and 3,300 mm, more preferably between 1,800 mm and 3,000 mm, still more preferably between 2,100 mm and 2,700 mm, and most preferably between 2,400 mm and 2,600 mm. The flexibility of the threaded sleeve makes it possible to meet specific project requirements, such as adapting to different lengths **between** the storage and transport frames. As a result, the apparatus can be deployed in diverse situations, which increases versatility and usability. This flexibility makes the system suitable for various applications, such as transporting wind turbine blades of different sizes, which reduces the need for different specialized components. This leads to lower costs and more efficient use of materials. The ability to quickly replace or adjust the threaded sleeve significantly reduces installation time, contributing to increased operational efficiency by reducing time lost adjusting to different transport configurations. These rapid adjustments make it possible to better respond to changing transport needs and unforeseen circumstances, such as variations in the dimensions of the storage and transport frames. This leads to a shorter throughput time, less downtime and lower operational costs, as well as improved planning of logistics processes.

In a particular preferred embodiment, the apparatus is such that the threaded sleeve is provided, at one axial end, with a left-hand internal thread and, at an opposite axial end, with a right-hand internal thread, both of which are configured to engage with corresponding external threads of a system making use of threaded sleeves. The threaded sleeve connects two identical separated end portions of a central shaft, wherein the thread of the threaded sleeve corresponds to the thread located on the external circumference of the separated end portions of a central shaft. As a result, the length adjustment can be easily realized, which contributes to the flexibility of the system. This configuration ensures that when the threaded sleeve is rotated, both ends simultaneously move inward or outward. As a result, the length adjustment can be easily realized, which contributes to the flexibility of the system. This design provides a firm and stable connection, as a result of which the locking mechanisms operate safely and reliably, even under heavy load and during transport. This design provides a firm and stable connection, as a result of which the twistlock systems/locking mechanisms operate safely and reliably, even under heavy load and during transport. This provides a reliable solution for connecting storage and transport frames on which wind turbine blades are arranged. These design choices contribute to a durable and efficient operation of the system, even under the most challenging conditions. By this internal thread, the distance between the frames can be accurately corrected, which provides for an optimal matching to the specific requirements of the transport. This provides for a stable and secure coupling between the storage and transport frames and clarifies the compatibility and the connection mechanism of the components. The flexibility of the threaded sleeve makes it possible to meet specific project requirements, as a result of which the apparatus can be deployed in diverse situations, which increases versatility and usability. This flexibility makes the system suitable for various applications, such as transporting wind turbine blades of different sizes, which reduces the need for different specialized components. This leads to lower costs and more efficient use of materials. These rapid adjustments make it possible to better respond to changing transport needs and unforeseen circumstances, which leads to a shorter throughput time, less downtime and lower operational costs, as well as improved planning of logistics processes.

In a particular preferred embodiment, the apparatus is such that the threaded sleeve is provided, at one axial end and at an opposite axial end, with a fixedly attached nut. Wherein the threaded sleeve is built up from a sleeve with an internal thread with at both ends a nut, which is preferably firmly fastened to the threaded sleeve. These nuts ensure that the connection remains reliable and stable, even under heavy load. In a particular preferred embodiment these nuts are welded on, which provides extra strength and reliability of the connection, because the risk of loosening during transport is reduced. The presence of nuts at both ends of the threaded sleeve provides for an even distribution of forces, which increases the stability of the apparatus and contributes to a secure connection. Welding the nuts provides extra strength, as a result of which the risk of the nuts coming loose decreases. This results in higher reliability of the system, especially during intensive transport conditions. By tightening the welded nuts at both ends of the threaded sleeve, the length adjustment can be easily realized. When the threaded sleeve is rotated, both ends simultaneously move inward or outward, which makes it simple to make the length adjustment possible. This makes it possible to flexibly adapt the storage and transport frames to different situations and provides for an optimal configuration for every transport need.

In a particular embodiment, the apparatus is such that the threaded sleeve is provided with at least one cover element suitable to give access to the two identical separated end portions. In a still further embodiment the cover element is fastened with two bolts, and protects the internal bolts and makes controlled disassembly possible. In another preferred embodiment two cover elements are present, both fastened with two bolts, as a result of which additional protection and easier access is made possible. These cover elements preferably offer an extra protection layer against environmental factors such as dust and moisture, which can extend the service life of the internal components. By removing the cover elements, the internal bolts can be easily reached for maintenance or adjustment, which facilitates the accessibility of the internal components for installation and disassembly of the apparatus. The cover element can optionally be manufactured from a durable material such as stainless steel or a high-grade plastic to provide resistance against corrosion and wear. The cover element can further optionally be designed to be compatible with different lengths of the threaded sleeve, so that it can be used in combination with different configurations of the apparatus. This makes the system more versatile and more broadly applicable in different transport environments.

The installation of the apparatus, including the cover element, can thereby be performed faster and more reliably, which results in lower labor costs and less downtime time. These advantages make the apparatus particularly suitable for use in the wind energy industry, where efficiency and reliability are of crucial importance.

In a particular embodiment, the apparatus is designed such that the cover element can be easily removed when maintenance or replacement of parts is needed. This ensures that the internal bolts and other fasteners are quickly accessible, as a result of which maintenance is carried out more easily. The possibility to quickly disassemble the cover element contributes to ease of maintenance and extends the service life of the apparatus. Another advantage of the cover elements is that they are manufactured from high-quality, durable materials such as stainless steel or high-grade plastic. These materials are not only resistant to corrosion, but also provide firm protection against mechanical damage. This means that the internal components of the apparatus remain well protected, even under severe conditions, such as transport over rough terrains or during extreme weather conditions.

In an embodiment, the apparatus is such that the two identical separated end portions comprise a locking element that is suitable for avoiding the unintended unscrewing of the two identical separated end portions and the threaded sleeve. In a still further embodiment there are located in the identical separated end portions of the central shaft two bolts that must be unscrewed to remove the threaded sleeve from the two identical separated end portions of a central shaft. The internal bolts, also called locking bolts, are intended only to prevent the external thread from being unintentionally completely unscrewed out of the threaded sleeve. They form a thickening at the end of the external thread, which collides with the internal thread as soon as it is screwed out too far. The threaded sleeve has no direct connection with the locking bolts, but remains free. The threaded sleeve can, with the aid of the integrated adjusting and locking key, regulate different distances, which can unintentionally lead to the unscrewing of the threaded sleeve from the two identical separated end portions of a central shaft. These locking mechanisms are designed to firmly connect the apparatus with the storage and transport frames and contain robust fastening mechanisms that provide for a secure coupling between the different transport elements. This increases stability during transport and minimizes the risk of damage to the wind turbine blades. The removal of the bolts proceeds together with the cover element and makes it possible to disconnect the threaded sleeve from the two identical separated end portions of a central shaft. The locking bolts play a supporting role in this by preventing the external thread from being unintentionally screwed out too far, as a result of which the stability of the system is maintained. This careful removal and unlocking of components ensures that the system can be disassembled efficiently, while the likelihood of damage or unintended movements is minimal.

In another embodiment, the apparatus is provided with two cover elements. These cover elements on the threaded sleeve must first be removed before further steps can be undertaken. In the two identical separated end portions of a central shaft there are two bolts that must be unscrewed to remove the threaded sleeve from the two identical separated end portions of a central shaft. The internal bolts, also called locking bolts, are intended only to prevent the external thread from being unintentionally completely unscrewed out of the threaded sleeve. They form a thickening at the end of the external thread on two identical separated end portions of a central shaft, which collides with the internal thread as soon as it is screwed out too far.

In a preferred embodiment, the apparatus has a maximum safe load, which lies between 168 kN and 300 kN, according to DNV and Eurocode regulations. The apparatus is designed as a robust system with a certain maximum safe load, determined according to DNV and Eurocode. The term "maximum safe load" (MSL) refers to the maximum load that can be secured for both tension and compression in the axial direction of the threaded sleeve. The MSL is determined using a safety factor of 1.25 to demonstrate load capacity and is dependent on the length of the threaded sleeve. In a preferred embodiment, the maximum safe load is 300 kN for a length between 1,200 mm and 2,100 mm. For a length between 2,100 mm and 2,400 mm it amounts to 290 kN, while for a length between 2,400 mm and 2,700 mm the MSL is 251 kN. For lengths between 2,700 mm and 3,000 mm the maximum safe load is 218 kN, for lengths between 3,000 mm and 3,300 mm it is 190 kN, and for lengths greater than 3,300 mm the maximum safe load is 168 kN.

In a preferred embodiment, the apparatus has a maximum safe load, 244 kN for a length of 1,800 mm and 2,100 mm.

The robust construction of the threaded sleeve increases the resistance to mechanical load during transport, as a result of which it is better resistant to shocks and vibrations. This increases the safety of the wind turbine blades during transport, since shocks and vibrations can cause structural damage. Moreover, the increased resistance reduces the likelihood of unexpected failures, which leads to a safer and more reliable transport process and lower maintenance costs.

In a particular embodiment, the connection mechanism is equipped with a hinge mechanism that is suitable to improve the axial and transverse orientation of the storage and transport frames relative to one another. In a further preferred embodiment, the apparatus is designed with a specific alignment ratio that provides for a stable and secure connection during transport. The terms "maximum axial alignment ratio" and "maximum transverse alignment ratio" refer, respectively, to the ratio of axial and transverse alignment relative to the length of the threaded sleeve. In a preferred embodiment, these fall within the ranges of [0.018 - 0.023] for the axial alignment and [0.024 - 0.031] for the transverse alignment. The maximum axial alignment ratio ensures that the load is evenly distributed over the threaded sleeve, as a result of which excessive stress concentrations are prevented. This increases the structural integrity of the apparatus and prevents tilting or instability during storage and transport, which significantly improves safety. Additionally, a well-set axial alignment ratio contributes to an extended service life of the system by reduction of dynamic loads, which results in lower maintenance costs.

The maximum transverse alignment ratio ensures that the apparatus is resistant to lateral forces during transport, as a result of which deformation or shifting of the structure is prevented. This contributes to structural integrity and increases the safety and stability of the connection, even during sudden maneuvers or rough sea. By optimizing the transverse alignment ratio, the friction between the threaded sleeve and other structural elements is also reduced, which results in less wear, lower maintenance costs, and a longer service life of the system.

In a particular preferred embodiment, the apparatus is such that the threaded sleeve at the axial end is provided with a left-hand lock nut provided with a left-hand thread and at the opposite axial end is provided with a right-hand lock nut provided with a right-hand thread, wherein the left-hand and the right-hand lock nut are suitable to fix the threaded sleeve. These lock nuts are crucial for adjusting the distance between the storage and transport frames, as a result of which a firm and stable connection is guaranteed. The lock nuts ensure that the threaded sleeve can be adjusted in a reliable manner, which provides flexibility and stability in different situations. This configuration contributes to the versatility of the system and makes it suitable for diverse applications. The two lock nuts at the ends of the threaded sleeve provide for a precise adjustment and a stable connection, which is essential to meet specific project requirements. This makes the apparatus suitable for diverse applications, such as transporting wind turbine blades of different sizes. The use of lock nuts provides a firm and secure connection, which leads to lower costs and a more efficient use of materials. The lock nuts make it possible to adjust the connection quickly and simply, which significantly shortens installation time and contributes to higher operational efficiency. This ensures that the apparatus can be deployed flexibly to better respond to changing transport needs and unforeseen circumstances. As a result, the throughput time becomes shorter, there are fewer downtime times and the operational costs decrease, which contributes to improved planning of logistics processes.

In a preferred embodiment, the apparatus is equipped with a connection mechanism that comprises a lifting device. This lifting device makes it possible to move and position the apparatus safely, even in tight spaces or under difficult conditions, such as during loading and unloading operations in ports or warehouses. The presence of the lifting device provides increased safety and reduces the risk of damage to the apparatus or the wind turbine blades during transport. The connection mechanism is moreover compatible with standard lifting tools, as a result of which usability and logistics efficiency are increased. This means that the apparatus can be easily integrated into existing logistics processes, without specialized equipment being needed. The use of standard lifting tools contributes to a simple and safe installation, which lowers operational costs and increases reliability. In a further preferred embodiment, the apparatus is equipped with a connection mechanism that comprises a lifting eye. The lifting eye enables the user to lift and move the entire apparatus safely. This facilitates the loading and unloading of the storage and transport frames, which is crucial in situations where precision and safety are central. The use of the lifting eye ensures that the forces exerted during lifting are distributed evenly, as a result of which the risks of damage to the components are minimal. The presence of the lifting eye makes it possible to move the apparatus safely, even in tight spaces or under difficult conditions, such as during loading and unloading operations in ports or warehouses. The lifting eye is moreover compatible with standard lifting tools, as a result of which usability and logistics efficiency are increased. In a further preferred embodiment, the lifting eye is screwed into the hinge pin of the connection mechanism. This integration provides a robust and secure fastening, as a result of which the lifting device is firmly anchored to the structure of the apparatus. This design increases safety during lifting, because the lifting eye cannot come loose from the hinge pin. Moreover, the integration of the lifting eye in the hinge pin contributes to a more efficient use of space, as a result of which the lifting process becomes simpler, even in tight working conditions. The integrated lifting eye ensures that the forces during lifting are effectively absorbed and distributed, which further increases the stability of the apparatus during transport and storage.

In a particular preferred embodiment, a lifting eye is present that is fastened in the hinge pin. This hinge pin is firmly secured with a nut and anchored with a spring-type cotter pin, which contributes to stability and safety during transport. The apparatus also has hinged forks and a rotating central housing, which together provide increased flexibility and adaptability during use. These properties make it possible to maintain the connection between storage and transport frames, even with movements or varying load, which is crucial for the safe and efficient movement of wind turbine blades. The lifting eyes are integrated in the hinge pins of the connection mechanism and are designed to facilitate moving and installing the apparatus. The lifting eyes make it possible to move the apparatus safely, even in tight spaces, which is important during loading and unloading in confined spaces such as ports or storage facilities. These lifting eyes provide a safe lifting position, as a result of which the apparatus can be easily lifted and positioned without additional lifting devices being needed.

In an alternative embodiment, the connection mechanisms are provided with a twistlock system. The twistlock system is designed such that it can be easily installed and disconnected without the need for complex tools. This provides for an efficient use of the apparatus and reduces the time needed for installation and disassembly, which leads to lower operational costs. Moreover, the simple installation ensures that the system can be deployed flexibly for different types of storage and transport frames, which increases versatility. Preferably, the threaded sleeve is designed to be compatible with a range of different twistlock housings, as a result of which the system is versatilely deployable in different applications. This compatibility can be achieved by the use of standardized connections that can be easily adapted to the specific requirements of the user. An important advantage of this configuration is the increased deployability and the ease of transport of the storage and transport frames. By the rapid locking and unlocking of the twistlock housings, the building up and dismantling of transport structures can be significantly accelerated, which saves time and costs during logistics operations. The locking cone is a key factor in the twistlock housing. This cone engages with the corner castings of the storage and transport frames and provides a firm and secure connection. The twistlock housings comprise locking cones that fit precisely in the corner castings and are then locked by means of side housings, which results in a stable and reliable connection. Thanks to this locking cone the twistlock housing can fasten itself firmly in the corner castings, as a result of which the likelihood of shifting or coming loose during transport is significantly reduced. This is especially important during long distances or transport over rough roads or waters, where vibrations and shocks occur constantly. This system engages with corner castings of the storage and transport frames, as a result of which the apparatus can be coupled quickly and safely, without additional fastening means. The twistlock system provides a firm locking in both the horizontal and vertical direction, which prevents shifting of the load during transport. The use of the locking cone and hinge mechanism ensures that the connection remains stable, even under heavy loads and during transport, which significantly increases the safety of the load. The lifting device makes it possible to move the apparatus safely and simply, which increases efficiency during loading and unloading and minimizes the likelihood of damage. The design of the twistlock housing ensures that the system can be coupled and disconnected quickly without special tools, which leads to faster installation and disassembly and thus lower operational costs. The twistlock housings make a safe stacking of storage and transport frames possible, as a result of which frames remain firmly on one another during transport, which contributes to a stable and safe load, especially over long transport distances. Twistlock housings are simple to operate, as a result of which the risk of errors during assembly is reduced, which increases the reliability of the assembly and ensures that the connection is carried out correctly. The firm fastening of twistlock housings provides extra protection against undesired movements, even when the transport takes place over uneven terrain, as a result of which damage to both the storage and transport frames and the wind turbine blades is prevented. In a preferred embodiment, the invention concerns an apparatus with a twistlock system that engages with a corner casting of the storage and transport frames, wherein this system provides a stable and secure connection. This connection prevents the frames from shifting during transport and provides anchoring both in and between the stacks. The twistlock system is preferably designed to facilitate a seamless integration with the corner castings of the storage and transport frames, wherein it makes use of locking cones that fit precisely in the corner castings. Preferably, the locking cones are manufactured from a high-quality, durable material that is resistant to the forces that occur during transport. More preferably a material is chosen that is both corrosion-resistant and wear-resistant, as a result of which the service life of the twistlock system is extended. In a further preferred embodiment, the twistlock system can be equipped with a mechanism that automatically locks when the cones are placed in the corner castings, which further increases user-friendliness and safety. This system is ideal for transport applications in which efficiency and safety are of great importance, such as in the transport of large wind turbine blades over long distances.

Preferably, the threaded sleeve is designed to be compatible with a range of different twistlock housings, as a result of which the system is versatilely deployable in different applications. This compatibility can be achieved by the use of standardized connections that can be easily adapted to the specific requirements of the user.

The hinge mechanism in the connection mechanism consists of a movable hinging fork and a hinge pin. They ensure that the twistlock housing adapts to an incorrect orientation of the corner castings of the storage and transport frames relative to one another. The hinging function makes it possible to maintain a certain degree of flexibility, so that the connection can move during transport without excessive stress arising on the components. Additionally, a correct transverse and axial alignment provide for an optimal distribution of the forces on the connection. The axial alignment helps to prevent tilting of the frames, while the transverse alignment ensures that no lateral shifts occur. This contributes to the overall stability and safety of the load during transport. This mechanism contributes to an increased robustness of the entire connection because it can accommodate and absorb movements and vibrations during transport.

In a preferred embodiment, the apparatus comprises an integrated adjusting and locking key, the integrated adjusting and locking keys is suitable for engaging on the left-hand and right-hand lock nuts, and is also suitable for engaging on the affixed nut of the threaded sleeve. This makes it possible to tighten or loosen the lock nuts simply, which provides for a precise adjustment and a secure locking of the threaded sleeve. As a result, the installation and the disconnecting of the apparatus are carried out more efficiently and more safely. Another notable feature of the apparatus is the use of an adjusting and locking key, which not only serves for anchoring the threaded sleeve, but can also be anchored to the structure when it is not in use. This prevents loss or damage of the key and ensures that the key is always within reach when needed. The key can be anchored to the connection mechanism; in a certain preferred embodiment, this is with a double-spring cotter pin, which offers an extra security layer and further increases operational efficiency. This key increases precision during installation, which results in tight and secure connections, and thus contributes to the stability of the entire structure. The integrated design contributes to reduced workload and increased efficiency, as a result of which less time and effort are needed for the installation and the maintenance of the apparatus. As a result, the time needed for installing or removing the apparatus is significantly reduced, which contributes to a higher operational efficiency. By integrating the key in the apparatus, the use of external tools becomes superfluous. This design ensures that the threaded sleeve can be set flexibly and is firmly locked as soon as the desired length is reached, which is essential for a safe and stable connection.

This flexibility and firm locking provide increased stability during transport, as a result of which the risks of shifting or coming loose of the frames are minimized.

In a preferred embodiment, the apparatus is such that the integrated adjusting and locking key is suitable to be fastened to the connection mechanism.

In a second aspect, the invention concerns a method for connecting storage and transport frames for wind turbine blades with the aid of an apparatus, an apparatus comprising, a central shaft with in the middle two identical separated end portions, with a threaded sleeve that connects the two separated end portions and a connection mechanism; at least two storage and transport frames with a corner casting, wherein the storage and transport frames are positioned at a distance from one another; wherein the method comprises the following steps:
□ placing a wind turbine blade on the storage and transport frame,
□ determining the distance between the storage and transport frame, wherein the distance is defined as the spacing between two corner castings of the storage and transport frames;
□ determining whether the distance can be bridged by the apparatus, wherein it is checked whether the distance lies within a suitable margin to be bridged safely and effectively;
□ the threaded sleeve comprises at the axial end an internal left-hand thread and at the opposite axial end an internal right-hand thread, the left-hand and right-hand internal thread being suitable for an external thread that is located on the external circumference of the connection mechanism;
□ the threaded sleeve is unscrewed from the connection mechanism if a margin on the distance is exceeded, a new threaded sleeve that does lie within the margin on the distance is then screwed on;
□ securing the new threaded sleeve with the aid of at least one lock nut at the axial end of the threaded sleeve;
□ the connection mechanism engages on the corner castings of the storage and transport frames as a result of which the apparatus forms an x-connection in the x-direction between the two corner castings;
□ a third corner casting of a third storage and transport frame is stacked in the y-direction on the storage and transport frame;
□ the third corner casting engages on the connection mechanism and thus forms a y-connection in the y-direction between the transport frame and the third transport frame;
□ the connection mechanisms comprise a lever wherein a locking cone that is part of the connection mechanism will secure the y and x connection.

First, the wind turbine blades are placed carefully on the storage and transport frames. This is done such that an optimal balance arises and a stable basis is created for the transport. Precise alignment of the blades is essential in this to prevent them from shifting or becoming damaged during the transport. Precise alignment comprises both transverse and axial alignment. Transverse alignment means that the blades are well aligned over the length of the frame to ensure an even distribution of the weight and to prevent the load from shifting laterally during transport. Axial alignment implies that the blades are placed correctly in height, so that the load remains stable and axial forces are properly accommodated. Both alignments are essential for ensuring stability and minimizing tilting movements during the transport. After positioning the wind turbine blades, it is checked whether the strength of both the storage and transport frames and the apparatus is sufficient to bear the specific load. It is also checked whether the maximum transverse and axial alignment ratio has been reached to prevent structural instability.

Subsequently, the distance between the corner castings of the storage and transport frames is measured. It is important that this distance corresponds to the length of the threaded sleeve. If the correct distance is not reached, the threaded sleeve must be replaced by a threaded sleeve with the correct length. The threaded sleeve plays a crucial role in the stability of the entire structure, since it connects the two connection mechanisms and provides for a firm coupling between the storage and transport frames.

The threaded sleeve of the apparatus is variable in size and can be adapted to different project requirements, which increases the versatility of the system. As a result, the apparatus is suitable for diverse applications, such as transporting wind turbine blades of different sizes. In a preferred embodiment, the threaded sleeve concerns a system with adjustable lengths, so that the distance between the storage and transport frames can be changed. The length of the threaded sleeve can vary from 1,200 mm to 3,600 mm, with further refinement within this range to meet specific needs. This flexibility makes the system suitable for different applications and reduces the need for specialized components, which leads to lower costs and a more efficient use of materials.

In an embodiment, the method comprises that the threaded sleeve comprises at least one cover element and that the cover element must be removed to unscrew the threaded sleeve.

In an embodiment, the method comprises that the ratio of axial alignment to the length of the threaded sleeve lies in the range of [0.018 - 0.023] and that the ratio of transverse alignment to the length of the threaded sleeve lies in the range of [0.024 - 0.031].

In a further embodiment, the method comprises that an integrated adjusting and locking key is suitable for acting on both the threaded sleeve and the new threaded sleeve, and also on the lock nut. The threaded sleeve is then anchored by tightening the lock nuts with the aid of an integrated adjusting and locking key. This key provides for a controlled tightening of the lock nuts, as a result of which a firm connection is guaranteed without risk of coming loose.

The described method provides for a precise and safe connection of storage and transport frames for wind turbine blades. By the application of this procedure, stability and safety during transport are ensured, and the likelihood of damage to the wind turbine blades is limited to a minimum, even during long transport distances or under challenging transport conditions. This approach leads to a more efficient transport process with lower operational costs and improved logistics planning.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

When "around" or "about" is used in this document with respect to a measurable quantity, a parameter, a duration or point in time, and the like, this is intended to mean variations within ±20%, preferably within ±10%, more preferably within ±5%, even more preferably within ±1%, and still more preferably within ±0.1%, of the cited value, insofar as such variations are applicable to the invention described herein. However, it must be understood that the value of a quantity used where the term "about" or "around" is used, is itself specifically disclosed.

Quoting numeric intervals by the endpoints includes all integers, fractions, and/or real numbers between the endpoints, including those endpoints.

In a first aspect, the invention relates to

### EXAMPLES

The present invention will now be further explained by means of the following examples. The invention is in no way limited to the given examples or to the embodiments that are presented in the figures.

### Example 1.

A test was carried out with an apparatus wherein the threaded sleeve had a length of 2,400 mm, with left-hand and right-hand internal thread at, respectively, the one and the other end. The apparatus was used to connect storage and transport frames for wind turbine blades. The twistlock system provided for a fast and safe connection with the corner castings of the frames. The installation was faster than expected due to the integrated adjusting and locking key, which significantly increased user-friendliness.

### Example 2.

In another test setup the apparatus was tested with a threaded sleeve of 3,600 mm. The lock nuts were tightened firmly with the aid of the integrated key. Thanks to the locking cones in the twistlock housings, an improved fastening strength was achieved, which resulted in increased safety during the transport of the wind turbine blades.

### Example 3.

A further test comprised the use of the apparatus with a threaded sleeve of 1,200 mm. The threaded sleeve was provided with a cover element that could be removed quickly, as a result of which a faster installation was possible. This cover element protected the internal bolts, which increased the reliability of the installation.

### Example 4.

The apparatus was tested in a scenario in which the storage and transport frames were subject to varying loads. The rotating central housing and hinged forks provided the necessary flexibility, as a result of which the connection remained robust. This demonstrated the adaptive structural flexibility of the apparatus.

### Example 5.

In a final experiment the apparatus was subjected to a maximum load of 300 kN. The test showed that the apparatus met the safety standards according to DNV and Eurocode, which increased the reliability and acceptance of the system in the industry.

### Example 6

In an experimental setup, an embodiment of the present apparatus was compared with an alternative bridge system that had previously been commercialized but is not commonly used as a standard solution. That is applied for connecting two separate corner castings. The embodiment of the invention was in that case configurable with a variable length between 1,800 mm and 2,075 mm, whereas the alternative bridge system has a maximum length of 2,075 mm. Both systems were subjected to both compression tests (compression) and tensile tests, carried out under identical test conditions. From the test results it appears that the alternative bridge system exhibits a significantly lower load-bearing capacity. Both the test load and the breaking load are substantially lower than in the embodiment of the invention. The present apparatus, by contrast, withstands on the same span (up to 2,075 mm) a significantly higher test load and breaking load, and this under both compression and tensile loading. These measurement results objectively demonstrate that the invention is not only more versatile in use due to its variable length range, but also provides a significantly higher structural strength and safety margin compared with the alternative bridge system. This confirms that the invention realizes an improved technical operation, in particular an increased load capacity without loss of functionality at longer spans.

**Table 1 compression test**

| System | Test load (kN) | Test load (kN) | Breaking load (kN) | Breaking load (kN) |
|---|---|---|---|---|
| Alternative bridge | 11.25 | 11.6 | 18 | 20.6 |
| Alternative bridge | 11.25 | 19.7 | 18 | 22.7 |
| Apparatus | 375 | 375 | 600 | 600 |
| Apparatus | 375 | 375 | 600 | 489 |

For the tensile tests it was determined that the difference in performance between the alternative bridge system and the embodiment of the present invention seemed smaller than in the compression tests. Nevertheless, the measurement results clearly show that the alternative bridge system can withstand significantly lower test loads and breaking loads, while the embodiment of the invention, on the same span, endures substantially higher loads. This confirms that the present invention, even in tensile situations, is preferably applied in applications in which high loads or increased safety margins are required.

**Table 2 Tensile test**

| System | Test load (kN) | Test load (kN) | Breaking load (kN) | Breaking load (kN) |
|---|---|---|---|---|
| Alternative bridge | 220 | 225 | 352 | 363 |
| Alternative bridge | 220 | 228 | 352 | 366 |
| Apparatus | 375 | 375 | 600 | 600 |
| Apparatus | 375 | 375 | 600 | 600 |

From the compression tests it appears that the embodiment of the present apparatus has a clearly superior load capacity compared with the alternative bridge system for connecting two Twistlock units. While the alternative system can withstand only limited test loads and relatively low breaking loads, the invention shows that it can carry significantly higher forces on the same span. The alternative system reaches its limits faster, while the invention obviously provides a higher structural strength and reliability. The same trend also emerges from the tensile tests. Although the difference in absolute values seems smaller than in the compression tests. This means that the invention is not only stronger and more robust, but moreover better suited for heavily loaded systems in which tension and compression alternate or occur in combination. The tests confirm that the apparatus of the invention is clearly superior both in compression and in tension and provides a higher structural safety and versatility than the alternative bridge system.

It is assumed that the present invention is not limited to any of the embodiments described above and that various modifications may be made to the presented manufacturing example without departing from the scope of the appended claims. For example, the present invention is described with reference to a specific length of the threaded sleeve, but it is clear that the invention can be applied to different lengths of the threaded sleeve for different transport frame configurations.

It is clear that the method according to the invention, and the applications thereof, are not limited to the presented examples.

## Claims

1. Apparatus suitable for securing storage and transport frames via their corner castings for the transport and storage of wind turbine blades, comprising a central shaft with two ends and a threaded sleeve **characterized in that**
∘ the central shaft in the middle comprises two identical separated end portions, wherein the separated end portions on the external circumference are provided with an external thread and;
∘ the central shaft comprises, on opposite sides of the separated end portions, outer end portions that are further provided with a connection mechanism configured to engage with the corner castings of storage and transport frames;
∘ and **in that** the threaded sleeve is suitable for connecting the separated end portions of the central shaft, wherein the threaded sleeve spans the two separated end portions of the central shaft and is provided with an internal thread that engages fittingly on the external thread **characterized in that** at least one of the two identical separated end portions comprises a locking element that is suitable for avoiding the unintended unscrewing of that at least one of the two identical separated end portions and the threaded sleeve.

2. The apparatus according to preceding claim 1, **characterized in that** the threaded sleeve at one axial end is provided with an internal left-hand thread and at an opposite axial end with an internal right-hand thread that both can engage fittingly on the external thread.

3. The apparatus according to one of the preceding claim 1 or 2 **characterized in that** the threaded sleeve at the axial end and at the opposite axial end is provided with a fixedly attached nut.

4. The apparatus according to one of the preceding claim 1-3, **characterized in that** the threaded sleeve has a length of at least 1,200 mm and at most 3,600 mm.

5. The apparatus according to one of the preceding claim 1-4, **characterized in that** the apparatus has a maximum safe load that lies between 168 kN and 300 kN, according to DNV and Eurocode regulations.

6. The apparatus according to one of the preceding claim 1-5 **characterized in that** the threaded sleeve at the axial end is provided with a left-hand lock nut provided with a left-hand thread and at the opposite axial end is provided with a right-hand lock nut provided with a right-hand thread, wherein the left-hand and the right-hand lock nut are suitable to fix the threaded sleeve.

7. The apparatus according to one of the preceding claim 1-6, **characterized in that** the apparatus comprises an integrated adjusting and locking key, the integrated adjusting and locking keys is suitable for engaging on the left-hand and right-hand lock nuts, and is also suitable for engaging on the affixed nut of the threaded sleeve.

8. The apparatus according to one of the preceding claim 1-7, **characterized in that** the integrated adjusting and locking key is suitable to be fastened to the connection mechanism.

9. The apparatus according to one of the preceding claim 1-8, **characterized in that** the connection mechanism is equipped with a hinge mechanism that is suitable to improve the axial and transverse orientation of the storage and transport frames relative to one another.

10. The apparatus according to one of the preceding claim 1-9, **characterized in that** the threaded sleeve is provided with at least one cover element suitable to provide access to the two identical separated end portions.

11. The apparatus according to one of the preceding claim 1-10, **characterized in that** the two identical separated end portions comprise a locking element that is suitable for avoiding the unintended unscrewing of the two identical separated end portions and the threaded sleeve.

12. A method suitable for transporting and storing wind turbine blades, comprising: an apparatus comprising, a central shaft with in the middle two identical separated end portions, with a threaded sleeve that connects the two separated end portions and a connection mechanism; at least two storage and transport frames with a corner casting, wherein the storage and transport frames are positioned at a distance from one another; wherein the method comprises the following steps:
- placing a wind turbine blade on the storage and transport frame,
- determining the distance between the storage and transport frame, wherein the distance is defined as the spacing between two corner castings of the storage and transport frames;
- determining whether the distance can be bridged by the apparatus, wherein it is checked whether the distance lies within a suitable margin to be bridged safely and effectively;
- the threaded sleeve comprises at the axial end an internal left-hand thread and at the opposite axial end an internal right-hand thread, the left-hand and right-hand internal thread are suitable for an external thread that is located on the external circumference of the connection mechanism;
- the threaded sleeve is unscrewed from the connection mechanism if a margin on the distance is exceeded, a new threaded sleeve that does lie within the margin on the distance is then screwed on;
- securing the new threaded sleeve with the aid of at least one lock nut at the axial end of the threaded sleeve;
- the connection mechanism engages on the corner castings of the storage and transport frames as a result of which the apparatus forms an x-connection in the x-direction between the two corner castings;
- a third corner casting of a third storage and transport frame is stacked in the y-direction on the storage and transport frame;
- the third corner casting engages on the connection mechanism and thus forms a y-connection in the y-direction between the transport frame and the third transport frame;
- the connection mechanisms comprise a lever wherein a locking cone that is part of the connection mechanism will secure the y and x connection.

13. The method according to preceding claim 12, **characterized in that** an integrated adjusting and locking key is suitable for acting on both the threaded sleeve and the new threaded sleeve, and also on the lock nut.

14. The method according to one of the preceding claim 12 or 13, **characterized in that** the threaded sleeve comprises at least one cover element and **in that** the cover element must be removed to unscrew the threaded sleeve.

15. The method according to one of the preceding claims 12-14, **characterized in that** the ratio of axial alignment to the length of the threaded sleeve lies in the range of [0.018 - 0.023], and **in that** the ratio of transverse alignment to the length of the threaded sleeve lies in the range of [0.024 - 0.031].

16. A stacking apparatus for transporting and storing wind turbine blades comprising an apparatus according to claim 1 and carried out in accordance with claim 12, **characterized in that** the apparatus according to claim 1 interconnects the storage and transport frames via their corner castings.
